# EUROPEAN PATENT SPECIFICATION

(11) **EP 3 398 404 B1**
(45) Date of publication and mention of the grant of the patent: **04.09.2019**
(21) Application number: 16804783.5
(22) Date of filing: 30.11.2016
(51) Int. Cl.: H05B 6/64, A23L 3/54, H05B 6/80

(54) **A MICROWAVE OVEN WITH DRYING FUNCTION**
MIKROWELLENOFEN MIT TROCKNUNGSFUNKTION
FOUR À MICRO-ONDES AVEC FONCTION DE SÉCHAGE

(30) Priority: 29.12.2015 TR 201517189
(43) Date of publication of application: 07.11.2018
(73) Proprietor: Arçelik Anonim Sirketi, 34445 Istanbul (TR)
(72) Inventor: YIKILMAZCINAR, Sezgi, 34950 Istanbul (TR); GUR, Metin, 34950 Istanbul (TR); GUVEN, Merve, 34950 Istanbul (TR); ELMAS, Serdal, 34950 Istanbul (TR); KARATAS, Haluk, 34950 Istanbul (TR)
(86) International application number: PCT/EP2016/079254
(87) International publication number: WO 2017/114617

(56) References cited:
- EP-A1- 2 464 196
- US-A- 3 235 971
- US-A1- 2012 312 807
- US-A1- 2013 118 473

## Description

The present invention relates to a microwave oven wherein especially foodstuffs such as fruits and vegetables are dried.

In order to dry various foodstuffs, especially vegetables and fruits, in a microwave oven, specially formed drying trays are used. In the microwave ovens, the density of the electromagnetic field acting on the central part of the drying tray is higher than the edges of the tray. The foodstuffs placed in the center of the drying tray where the microwave density is higher dry quicker, while a longer period is needed on the edges and corners where the microwave density is lower. When drying of the foodstuffs placed on the edges and corners is completed, the foodstuffs in the center are observed to have burnt.

In the state of the art Great Britain Patent Application No. GB2236646, a microwave oven comprising a tray whereon kitchen utensils are placed and dried is disclosed.

The aim of the present invention is the realization of a microwave oven wherein the foodstuffs are enabled to be homogenously dried.

The microwave oven realized in order to attain the aim of the present invention, explicated in the first claim and the respective claims thereof, comprises a tray (drying tray) produced from a microwave permeable material, and one or more than one conductive plate that is produced from a metal material and that is placed on the corner-edge regions at the base of the tray where the density of the electromagnetic energy is low.

In various embodiments of the present invention, the conductive plates are placed as multiple pieces or a single piece so as to correspond to the edges and corners under the tray, providing that the density of the electromagnetic energy at the center of the tray is reduced and that the microwaves are guided toward the edges and the corners, and thus the foods are homogeneously dried on each region of the drying tray.

The microwave oven realized in order to attain the aim of the present invention is illustrated in the attached figures, where:
Figure 1 - is the schematic view of a microwave oven.
Figure 2 - is the perspective view of a tray used in the drying process.
Figure 3 - is the schematic view of the tray together with the conductive plates placed under the tray.
Figure 4 - is the schematic view of a quadrangular tray and of the conductive plates placed at intervals on the edges thereof.
Figure 5 - is the schematic view of a quadrangular tray and of the conductive plate placed as a single piece on the edges thereof.
Figure 6 - is the schematic view of a circular tray and the conductive plate placed as a single piece on the edge thereof.

The elements illustrated in the figures are numbered as follows:
1. Microwave oven
2. Microwave generator
3. Control unit
4. Tray
5. Cavity
6. Conductive plate
7. Hole
8. Support

The microwave oven (1) comprises a microwave generator (2), a control unit (3) that controls the microwave generator (2), a tray (4) produced from a microwave permeable material and whereon foodstuffs such as vegetables and fruits to be dried are placed, and a cavity (5) wherein the tray (4) is placed.

The microwave oven (1) of the present invention comprises one or more than one conductive plate (6) that is produced from a metal material, that is placed at the underside of the tray (4) in the edge and/or corner regions of the tray (4) wherein the density of the electromagnetic energy is low and that enables the microwaves to be directed to the said edge and/or corner regions of the tray (4).

After the foodstuffs, especially vegetables and fruits, to be dried are placed on the tray (4), the tray (4) is placed into the microwave oven (1). The microwave generator (2) operated by the control unit (3) provides the dissipation of the electromagnetic energy inside of the microwave oven (1). The conductive plates (6) produced from a metal material function as a lightning conductor and the electromagnetic energy is drawn toward the metal conductive plates (6) disposed on the corners and/or edges of the tray (4). The microwaves are enabled to be directed from the central parts of the tray (4) where the density of the electromagnetic energy is high toward the edge and/or corner parts where the density of the electromagnetic energy is lesser. Thus, the foodstuffs placed into the tray (4) are enabled to be homogenously dried within a short period. Moreover, since part of the microwaves acting on the central parts of the tray (4) is directed to the edges and/or corners, the density of the electromagnetic energy at the central parts is reduced and the foodstuffs at the said central parts are prevented from burning.

The tray (4) furthermore comprises holes in such size to permit passage of the electromagnetic energy and one or more than one support (8) that enables the foodstuffs to be kept in an orderly manner.

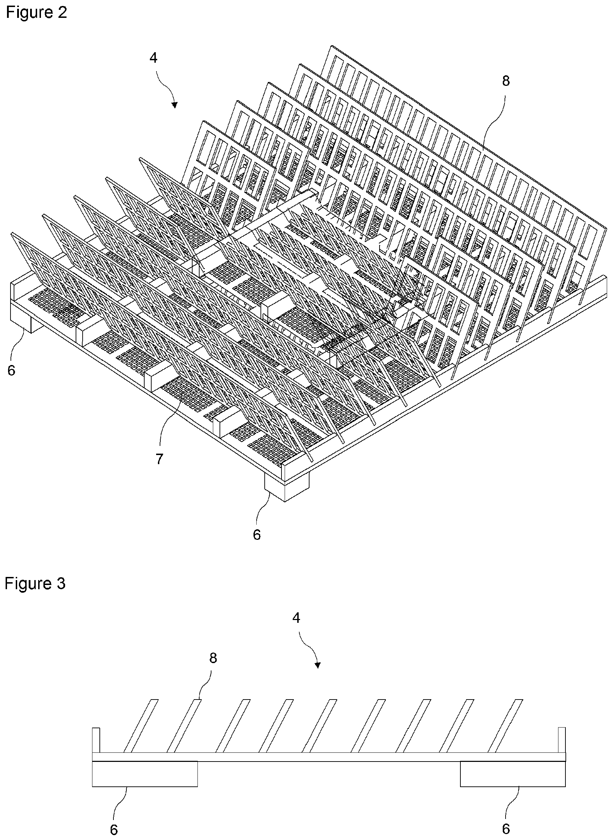

In an embodiment of the present invention, the conductive plates (6) are fixed at the underside of the tray (4), on the edge and/or corner sections where the electromagnetic energy is low (Figure 2).

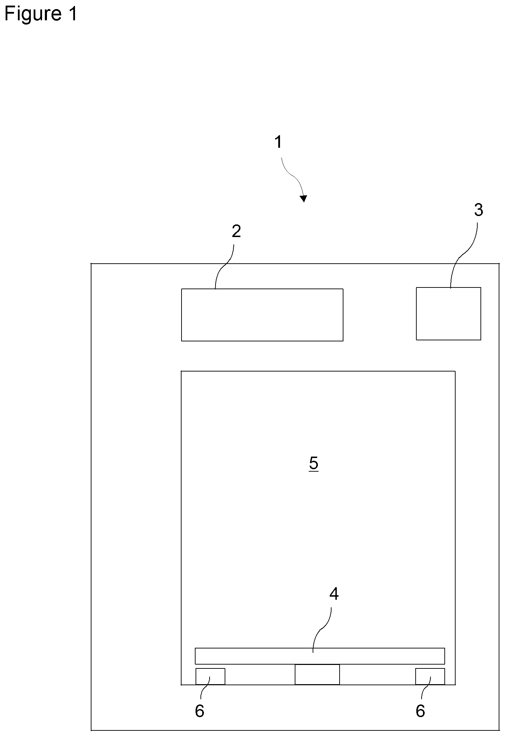

In another embodiment of the present invention, the conductive plates (6) are fixed on the base of the cavity (5) so as to correspond to the underside of the tray (4), to the edge and/or corner sections where the electromagnetic energy is low (Figure 1).

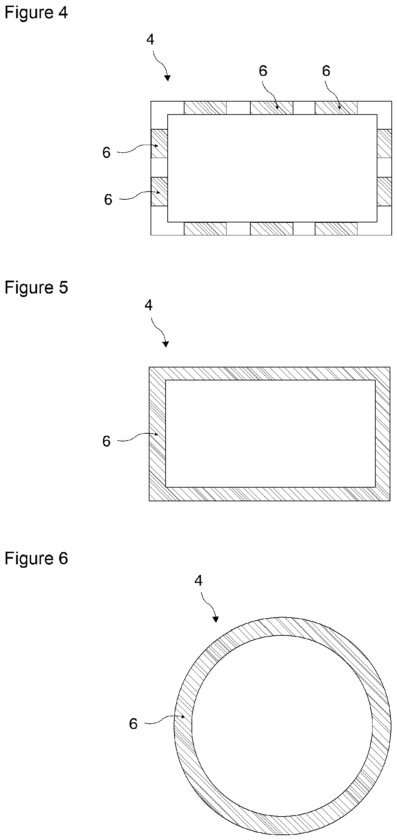

In an embodiment of the present invention, the conductive plates (6) are placed at intervals - preferably at equal intervals - on the edges of the tray (4). Thus, the density of the electromagnetic energy which is high at the central part is directed by means of the conductive plates (6) toward the edges and a homogenous electromagnetic energy density is obtained on the tray (4) (Figure 4).

In another embodiment of the present invention, the conductive plate (6) extends along the edges of the tray (4). In this embodiment, the microwave oven (1) comprises for example a single-piece conductive plate (6) produced from a metal material in the form of a quadrangular frame that extends all along the edges of a quadrangular tray (4) (Figure 6) or a single-piece conductive plate (6) produced from a metal material in the form of a ring that extends all along the periphery of the circular tray (4) (Figure 6).

In another embodiment of the present invention, the tray (4) has a quadrangular form, and the conductive plates (6) are placed on at least one corner of the tray (4) (Figure 2).

The conductive plates (6) of the present invention direct the electromagnetic energy with high density that acts on the central part of the tray (4) in the microwave oven (1) to the edge and/or corner parts of the tray (4) that the microwaves affect more weakly, thus providing a homogenous drying process.

## Claims

1. A microwave oven comprising a microwave generator (2), a control unit (3) that controls the microwave generator (2), a tray (4) produced from a microwave permeable material and whereon foodstuffs to be dried are placed, and a cavity (5) wherein the tray (4) is placed, **characterized by** one or more than one conductive plate (6) that is produced from a metal material, that is placed at the underside of the tray (4) in the edge and/or corner regions of the tray (4) where the density of the electromagnetic energy is low and that enables the microwaves to be directed to the said edge and/or corner regions of the tray (4).

2. A microwave oven (1) as in Claim 1, **characterized by** the conductive plates (6) being fixed at the underside of the tray (4), on the edge and/or corner sections thereof.

3. A microwave oven (1) as in Claim 1, **characterized by** the conductive plates (6) being fixed at the base of the cavity (5) so as to correspond to the edge and/or corner sections of the tray (4) at the underside of the tray (4).

4. A microwave oven (1) as in any one of the Claims 1 to 3, **characterized by** the tray (4) comprising holes (7) in such size to permit passage of electromagnetic energy and one or more than one support (8) that enables the foodstuffs to be kept in an orderly manner.

5. A microwave oven (1) as in Claim 1 or 2, **characterized by** the conductive plates (6) being placed at intervals on the edges of the tray (4).

6. A microwave oven (1) as in Claim 1 or 2, **characterized by** the conductive plate (6) extending along the edges of the tray (4).

7. A microwave oven (1) as in Claim 6, **characterized by** the conductive plate (6) being produced from a single-piece metal material in the form of a quadrangular frame that extends all along the edges of a quadrangular tray (4).

8. A microwave oven (1) as in Claim 1 or 2, **characterized by** the conductive plate (6) being placed on at least one corner of a quadrangular tray (4).

9. A microwave oven (1) as in Claim 6, **characterized by** the conductive plate (6) being produced from a single-piece metal material in the form of a ring that extends all along the periphery of a circular tray (4).

## Patentansprüche

1. - Ein Mikrowellenofen (1) umfasst einen Mikrowellengenerator (2), eine Steuereinheit (3), die den Mikrowellengenerator (2) steuert, einen aus einem mikrowellendurchlässigen Material hergestellten Tablett (4), auf dem zu trocknende Lebensmittel angeordnet sind, und einen Hohlraum (5) worin das Tablett (4) platziert ist, gekennzeichnet ist es durch eine oder mehrere Leitplatten (6), die aus einem Metallmaterial hergestellt sind und an der Unterseite des Tabletts (4) angeordnet ist, wo die Dichte der elektromagnetischen Energie gering ist und somit ermöglicht, dass die Mikrowellen auf die genannten Rand- und / oder Eckbereiche des Tabletts (4) gerichtet werden.

2. Ein Mikrowellenofen (1), wie in Anspruch 1 aufgeführt, **ist dadurch gekennzeichnet, dass** die Leitplatten (6) an der Unterseite des Tabletts (4), an dessen Rand und / oder Eckabschnitten befestigt sind.

3. Ein Mikrowellenofen (1), wie in Anspruch 1 aufgeführt, **ist dadurch gekennzeichnet, dass** die Leitplatten (6) am Boden des Hohlraums (5) so befestigt sind, dass sie den Rand und / oder die Eckabschnitte des Tabletts (4) am Boden der Unterseite des Tabletts (4) sind.

4. Ein Mikrowellenofen (1), wie in einem der Ansprüche 1-3 aufgeführt, **ist dadurch gekennzeichnet, dass** das Tablett (4) Löcher (7) in einer bestimmten Größe besitzt, damit elektromagnetische Energie durchgelassen werden kann, und eine oder mehrere Träger (8), die es ermöglichen, dass die Lebensmittel ordentlich aufbewahren werden.

5. Ein Mikrowellenofen (1), wie in Anspruch 1 der 2 aufgeführt, **ist dadurch gekennzeichnet, dass** die Leitplatten (6) in gewissen Abständen an den Rändern des Tabletts (4) angeordnet sind.

6. Ein Mikrowellenofen (1), wie in Anspruch 1 oder 2 aufgeführt, **ist dadurch gekennzeichnet, dass** sich die Leitplatte (6) entlang der Ränder des Tabletts (4) erstreckt.

7. Ein Mikrowellenofen (1), wie in Anspruch 6 aufgeführt, **ist dadurch gekennzeichnet, dass** die Leitplatte (6) in Form eines viereckigen Rahmens, aus einem einstückigen Material hergestellt ist und sich entlang der Kanten des viereckigen Tabletts (4) erstreckt.

8. Ein Mikrowellenofen (1), wie in Anspruch 1 oder 2 aufgeführt, **ist dadurch gekennzeichnet, dass** die Leitplatte (6) auf mindestens einer Ecke des viereckigen Tabletts (4) angeordnet ist.

9. Ein Mikrowellenofen (1), wie in Anspruch 6 aufgeführt, **ist dadurch gekennzeichnet, dass** die Leitplatte (6) in Form eines Rings, aus einem einstückigen Metallmaterial, der sich über den gesamten Umfang des kreisförmigen Tablets (4) erstreckt.

## Revendications

1. Un four à micro-ondes comprenant un générateur de micro-ondes (2), une unité de commande (3) qui commande le générateur de micro-ondes (2), un plateau (4) produit à partir d'un matériau perméable aux micro-ondes et sur lequel sont placés des aliments à sécher, et une cavité (5) où est placé le plateau (4), **est caractérisé en ce que** une ou plusieurs plaques conductrices (6) qui est fabriquée à partir d'un matériau métallique, qui est placée sur la face inférieure du plateau (4) dans les zones de bord et/ou de coin du plateau (4) où la densité de l'énergie électromagnétique est faible et qui permet aux micro-ondes d'être dirigées vers lesdites zones de bord et/ou de coin du plateau (4).

2. Un four à micro-ondes (1) selon la déclaration 1, **est caractérisé en ce que** les plaques conductrices (6) sont fixées sur la face inférieure du plateau (4), sur les bords et/ou les coins de celui-ci.

3. Un four à micro-ondes (1) selon la déclaration 1, **est caractérisé en ce que** les plaques conductrices (6) sont fixées à la base de la cavité (5) de manière à correspondre aux sections de bord et/ou de coin du plateau (4) sur la face inférieure du plateau (4).

4. Un four à micro-ondes (1) comme dans l'une quelconque des déclarations 1 à 3, **est caractérisé en ce que** le plateau (4) comporte des trous (7) de dimensions permettant le passage de l'énergie électromagnétique et un ou plusieurs supports (8) qui permettent de maintenir les aliments de manière ordonnée.

5. Un four à micro-ondes (1) selon la déclaration 1 ou 2, **est caractérisé en ce que** les plaques conductrices (6) sont placées par intervalles sur les bords du plateau (4).

6. Un four à micro-ondes (1) selon la déclaration 1 ou 2, **est caractérisé en ce que** la plaque conductrice (6) s'étend sur les bords du plateau (4).

7. Un four à micro-ondes (1) selon la déclaration 6, **est caractérisé en ce que** la plaque conductrice (6) est fabriquée à partir d'un matériau métallique monobloc sous la forme d'un cadre quadrangulaire qui s'étend le long des bords d'un plateau quadrangulaire (4).

8. Un four à micro-ondes (1) selon la déclaration 1 ou 2, **est caractérisé en ce que** la plaque conductrice (6) est placée sur au moins un coin d'un plateau quadrangulaire (4).

9. Un four à micro-ondes (1) selon la déclaration 6, **est caractérisé en ce que** la plaque conductrice (6) est fabriquée à partir d'un matériau métallique monobloc sous la forme d'un anneau qui s'étend sur toute la périphérie d'un plateau circulaire (4).
